# EUROPÄISCHE PATENTSCHRIFT

(11) **EP 1 002 675 B1**
(45) Veröffentlichungstag und Bekanntmachung des Hinweises auf die Patenterteilung: **15.03.2006**
(21) Anmeldenummer: 99121370.3
(22) Anmeldetag: 27.10.1999
(51) Int. Cl.: B60G 15/06, B60G 13/00, B60G 17/02

(54) **Federbein für Radaufhängungen**
Suspension strut for wheel suspensions
Jambe de suspension pour suspensions de roues

(30) Priorität: 19.11.1998 DE 19853315
(43) Veröffentlichungstag der Anmeldung: 24.05.2000
(73) Patentinhaber: ThyssenKrupp Bilstein GmbH, 58256 Ennepetal (DE)
(72) Erfinder: Sasse, Thomas, Dipl.-Ing., 58256 Ennepetal (DE)

(56) Entgegenhaltungen:
- DE-A- 2 656 707
- DE-A- 3 538 150
- DE-A- 4 340 494
- DE-A- 4 438 756
- GB-A- 873 193
- GB-A- 2 297 065
- US-A- 2 325 894
- US-A- 4 030 713

## Beschreibung

Die Erfindung betrifft ein Federbein für Radaufhängungen von Kraftfahrzeugen nach dem Oberbegriff des Anspruchs 1.

Derartige Federbeine dienen zur Federung und Führung vorzugsweise der gelenkten Räder eines Kraftfahrzeuges.

Aus der DE 26 56 707 A1 ist ein derartiges Federbein bekannt, bei dem der Federteller gegenüber dem Dämpfer- bzw. Behälterrohr in der Höhe verstellbar ist. Eine derartige Verstellung ermöglicht es, eine einfache Anpassung der Dämpfungs- und Federngeometrie, beispielsweise bei gleichartigen Fahrzeugen, an unterschiedliche Motorgewichte oder Komfortverhältnisse anzupassen. Dieses ist insbesondere dann erwünscht, wenn in verschiedenen Ländern eine einheitliche Stoßstangenhöhe vorgeschrieben ist. Dadurch kann die Lagerhaltung für Stoßdämpfer und Federn bei der Produktion verschiedener PKW's beispielsweise einer Baureihe, aber mit unterschiedlichen Ausstattungsmerkmalen, wesentlich reduziert werden.

Nachteilig bei der Lösung nach der DE 26 56 707 A1 ist keine feinfühlige Einstellung der Lage des Federtellers am Dämpfer- bzw. Behälterrohr möglich.

Der Erfindung liegt die Aufgabe zugrunde, eine einfache, höhenverstellbare Anbindung eines Federtellers an das Dämpfer- bzw. Behälterrohr zu ermöglichen, wobei eine sichere Anbindung bei einer feinfühligen Verstellung gewährleistet werden soll.

Diese Aufgabe wird erfindungsgemäß durch die Merkmale des Anspruchs 1 oder des Anspruchs 2 gelöst. Vorteilhafte Aus- und Weiterbildungen sind in den Ansprüchen 2 bis 9 beschrieben.

Die mit der Erfindung erzielten Vorteile bestehen insbesondere darin, daß eine feinfühlige Höhenverstellung des Federtellers gegenüber dem Dämpfer- bzw. Behälterrohr möglich ist und daß trotzdem eine sichere Anbindung gewährleistet wird. Weiterhin vorteilhaft werden die vom Rad erzeugten Geräusche wesentlich geringer zum Fahrzeug hin übertragen.

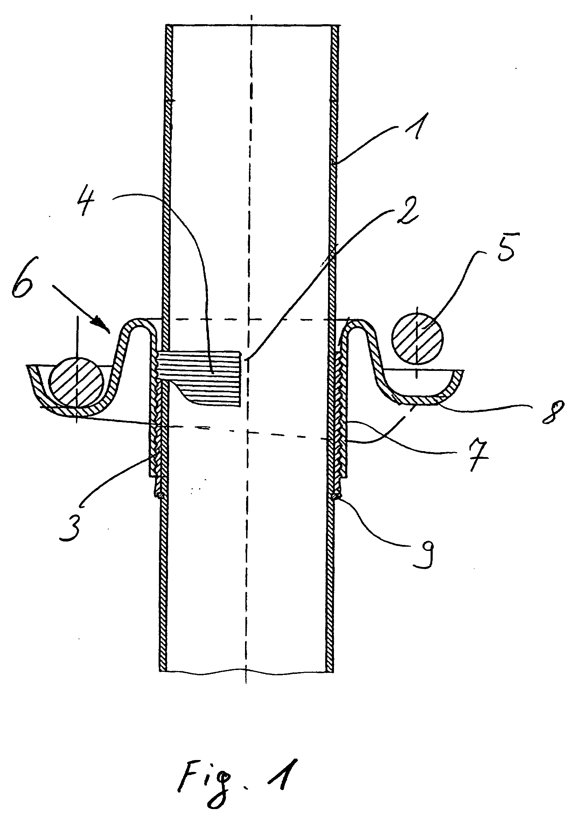

Ein Ausführungsbeispiel der Erfindung ist in der Zeichnung dargestellt und wird im folgenden näher beschrieben. Die Fig. 1 bis 3 zeigen Schnitte durch das Stoßdämpferrohr und den angebundenen Federteller mit verschiedenen Ausführungsformen.

Das Stoßdämpferrohr 1 weist einen im wesentlichen glatten zylindrischen Außenmantel auf. Dieser Außenmantel des Stoßdämpferrohrs 1 wird von einem, einen Längsschlitz 2 aufweisenden Rohrelement 3 umgeben, welches mit einer glatten zylindrischen Innenbohrung ausgebildet ist und mit einem Gewinde 4 versehen ist.

Bei der Ausbildung des Anschlusses des eine Feder 5 aufnehmenden Federtellers 6 an das Stoßdämpferrohr 1 gemäß Fig. 1 ist der Federteller 6 als einstückiges Blechteil ausgebildet. Er weist einen zylindrischen Hals 7 auf, der mit einem Innengewinde entsprechend dem Gewinde 4 des Rohrelements 3 ausgebildet ist. An diesen Hals 7 schließt sich ein sich radial nach außen erstreckender Kragen 8 an, der eine Profilierung entsprechend der Steigung der Feder 5 aufweist.

Die Feder 5 überträgt die entsprechende Aufstandskraft des Chassis auf das Stoßdämpferrohr 1 und damit auf das angebundene Rad. Sie wirkt somit als Druckfeder. Das Gewinde 4 ist so ausgebildet, daß diese Aufstandskraft der Feder 5 auf den Kragen 8 des Federtellers 6 potentiell zu einem Zusammendrücken des längsgeschlitzten Rohrelements 3 führt. Das bewirkt einen Reibschluß zwischen Rohrelement 3 und Stoßdämpferrohr 1. Weiterhin wird dadurch ein Reibschluß zwischen dem Gewinde 4 des Rohrelementes 3 und dem Innengewinde des Halses 7 des Federtellers 6 erzeugt, wodurch eine Drehhemmung erreicht wird, die die Höhenlage des Federtellers 6 fixiert.

Bei Entlastung des Federtellers 6 ist auch das Gewinde 4 entlastet, wodurch die Haftkraft zwischen Rohrelement 3 und Stoßdämpferrohr 1 und die vorbeschriebene Drehhemmung reduziert bzw. aufgehoben wird. In dieser Position kann das Rohrelement 3 auf dem Stoßdämpferrohr 1 axial verschoben werden. Die Einstellung der Höhenlage des Federtellers 6 auf dem Rohrelement 3 erfolgt durch das Verdrehen des Gewindes.

Ein in einer Nut des Stoßdämpferrohrs 1 eingelegter Sicherungsring 9 dient zum Abstützen des Rohrelements 3 am Stoßdämpferrohr 1. Die Nut zur Aufnahme des Sicherungsrings 9 liegt in einer Höhe am Stoßdämpferrohr 1, bei der das Rohrelement 3 die tiefste Lage des Federtellers zuläßt.

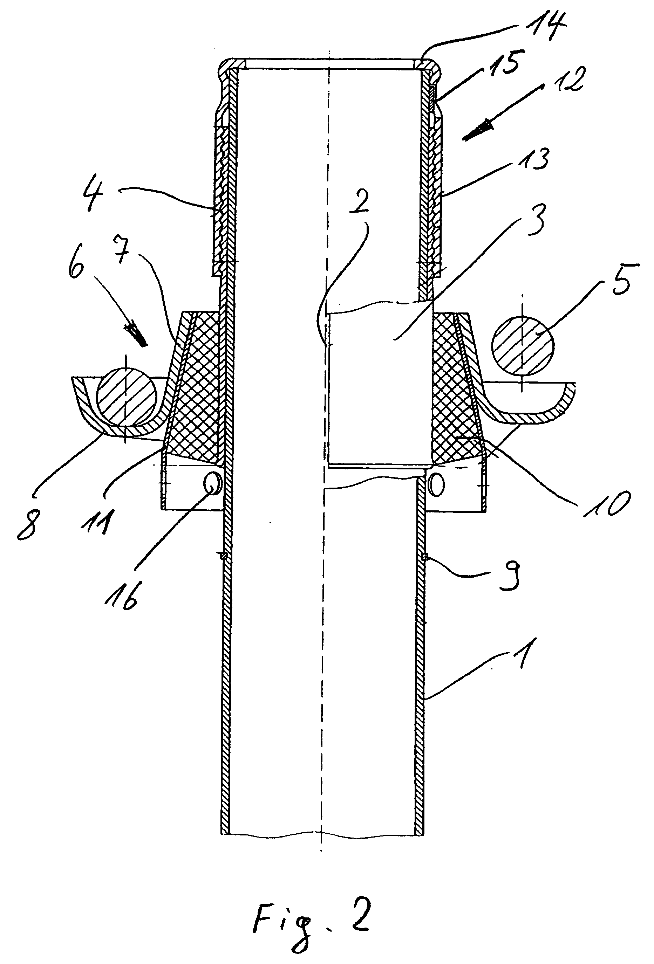

Bei der Ausbildung gemäß Fig. 2 ist das Rohrelement 3 lediglich über einen Teil seiner Höhe mit einem Außengewinde 4 versehen. Der Längsschlitz 2 erstreckt sich jedoch über die gesamte Höhe des Rohrelements 3. Im unteren Bereich ist das Rohrelement 3 von einer Manschette 10, vorzugsweise aus Gummi, umgeben. Diese Manschette 10 weist einen kegeligen Außenmantel auf und trägt hier den entsprechend kegelig ausgebildeten Hals 7 eines Federtellers 6. Zwischen dem Hals 7 des Federtellers 6 und der Manschette 10 ist ein Schutzmantel 11 angeordnet. Die belastete Feder 5 bewirkt über den konisch ausgebildeten Hals 7 des Federtellers 6 ein potentielles Zusammendrücken des Rohrelements 3, was zu einer entsprechenden Haftung des Rohrelements 3 auf dem Stoßdämpferrohr 1 und damit zusätzlichen Verdrehsicherung führt. Die wesentliche Funktion der Manschette 10 liegt jedoch darin, über die Feder 5 übertragene Schwingungen und induzierten Körperschall zu dämpfen, um diesen nicht über den Stoßdämpfer auf die Karosserie zu übertragen. Die Höheneinstellung des Rohrelements 3 und damit des Federtellers 6 erfolgt über einen Stellring 12. Dieser Stellring 12 weist ein zylindrisches Teil 13 auf, das mit einem zum Gewinde 4 des Rohrelements 3 korrespondierenden Innengewinde ausgebildet ist. Am oberen Ende übergreift der Stellring 12 mit einem nach innen gerichteten Kragen 14 das Stoßdämpferrohr 1. Eine Verdrehsicherung 15 verhindert ein Verdrehen von Stellring 12 und Stoßdämpferrohr 1 gegeneinander. Der Schutzmantel 11 ist mit Stellbohrungen 16 ausgebildet, über die das Rohrelement 3 bei entlastetem Federteller 6 verdreht werden kann. Dadurch kann die gewünschte Höhenlage des Federtellers 6 eingestellt werden. An der tiefstmöglichen Position des Rohrelements 3 und damit des Federtellers 6 dient hier ein Sicherungsring 9 dazu, daß diese Position nicht unterschritten werden kann, so daß stets gewährleistet ist, daß das Gewinde 4 des Rohrelements 3 stets mit dem Innengewinde des Stellrings 12 verbunden bleibt. Die notwendige Klemmwirkung wird vom zylindrischen Teil 13 über das Rohrelement 3 auf das Stoßdämpferrohr 1 übertragen.

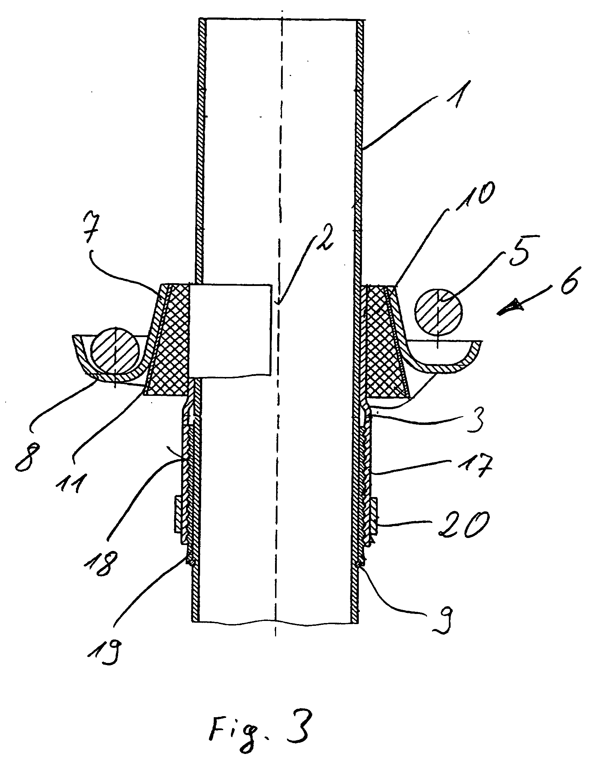

Die Anbindung des Federtellers 6 an das Stoßdämpferrohr 1 nach Fig. 3 entspricht vom Prinzip her der Anbindung des Federtellers 6 nach Fig. 2. Auch hier liegt der Federteller 6 über einen Schutzmantel 11 mit seinem konisch ausgebildeten Kragen 7 an der Außenseite des mit einem Längsschlitz 2 versehenen Rohrelements 3 an, wodurch eine gute Anlage zwischen Rohrelement 3 und Stoßdämpferrohr 1 und eine Geräuschreduzierung erzeugt wird. Im Gegensatz zur Ausbildung nach Fig. 2 ist das Rohrelement 3 jedoch unterhalb der Gummimanschette 10 mit einem Zylinderabschnitt 17 ausgebildet, der einen größeren Durchmesser aufweist. An diesem Zylinderabschnitt 17 ist ein Innengewinde angebracht. Das Innengewinde korrespondiert mit einem Außengewinde 18 auf einem ebenfalls geschlitzten Haltering 19. Der Haltering 19 wiederum stützt sich über einen Sicherungsring 9 auf dem Stoßdämpferrohr 1 ab. Durch Verdrehen des Rohrelements 3 gegenüber dem Haltering 19 erfolgt die Höheneinstellung des Federtellers 6. Die notwendige Klemmwirkung wird vom Haltering 19 über das Rohrelement 3 auf das Stoßdämpferrohr 1 übertragen.

Da das Rohrelement 3 über seine gesamte Länge mit einem Längsschlitz 2 versehen ist, ist auch der Zylinderabschnitt 17, der einen größeren Durchmesser und das Innengewinde aufweist, geschlitzt ausgebildet. Um zu verhindern, daß sich dieser Zylinderabschnitt 17 aufweitet und die korrespondierenden Gewindegänge zwischen Haltering 19 und Rohrelemente 3 gegeneinander verspringen können, ist ein Manschettenring 20 über den Zylinderabschnitt 17 des Rohrelements 3 geschoben.

### Bezugszeichenliste

- 1.: Stoßdämpferrohr
- 2.: Längsschlitz
- 3.: Rohrelement
- 4.: Gewinde
- 5.: Feder
- 6.: Federteller
- 7.: Hals
- 8.: Kragen
- 9.: Sicherungsring
- 10.: Manschette
- 11.: Schutzmantel
- 12.: Stellring
- 13.: Zylindrisches Teil
- 14.: Kragen
- 15.: Verdrehsicherung
- 16.: Stellbohrung
- 17.: Zylinderabschnitt
- 18.: Außengewinde
- 19.: Haltering
- 20.: Manschettenring

## Patentansprüche

1. Federbein für Radaufhängungen von Kraftfahrzeugen mit einem am Dämpfer-oder Behälterrohr befestigten Federteller (6) zur Abstützung der das Dämpfer- bzw. Behälterrohr umgebenden Schraubenfeder, wobei der Federteller (6) vorzugsweise als Blechteil ausgebildet ist und am Dämpfer- oder Behälterrohr lösbar und über ein Gewinde axial verstellbar befestigt ist, **dadurch gekennzeichnet, daß** die Befestigung reibschlüssig mittels eines über seine gesamte Länge geschlitzten Rohrelementes (3), das ein Außengewinde aufweist und mit seinem Innenmantel direkt am Dämpfer- bzw. Behälterrohr anliegt, erfolgt, das Rohrelement (3) mit einem, ein entsprechendes Innengewinde aufweisenden Stellring (12) bzw. Hals (7) des Federtellers (6) zusammenwirkt, wobei der Flankenwinkel des Gewindes so groß gewählt ist, daß die Kraft, mit der sich die Feder auf den Federteller (6) abstützt, ein radiales Zusammendrücken des geschlitzten Rohrelementes (3) bewirkt.

2. Federbein nach Anspruch 1, **dadurch gekennzeichnet, daß** der Flankenwinkel und/oder die Steigung des Gewindes so gering ist, daß die Belastung des Federtellers (6) zu einer Drehhemmung führt.

3. Federbein nach Anspruch 1 oder Anspruch 2, **dadurch gekennzeichnet, daß** zwischen dem Kragen (8) des Federtellers (6), auf dem die Feder (5) aufliegt und dem längsgeschlitzten Rohrelement (3) ein Federelement angeordnet ist.

4. Federbein nach einem oder mehreren der Ansprüche 1 bis 3, **dadurch gekennzeichnet, daß** der Kragen (8) des Federtellers (6) einen konischen Hals (7) aufweist, der sich über eine konisch ausgebildete, aus einem federnden Werkstoff hergestellte Manschette (10) am Rohrelement (3) abstützt.

5. Federbein nach Anspruch 4, **dadurch gekennzeichnet, daß** die Manschette (10) aus Gummi oder Kunststoff ausgebildet ist.

6. Federbein nach einem oder mehreren der Ansprüche 1 bis 5, **dadurch gekennzeichnet, dass** der Stellring (12) als ein ein Innengewinde aufweisendes Rohr ausgebildet ist, das über einen Kragen (14) auf dem Dämpfer- oder Behälterrohr aufliegt.

7. Federbein für Radaufhängungen von Kraftfahrzeugen mit einem am Dämpfer- oder Behälterrohr befestigten Federteller (6) zur Abstützung der das Dämpfer- bzw. Behälterrohr umgebenden Schraubenfeder, wobei der Federteller (6) vorzugsweise als Blechteil ausgebildet ist und am Dämpfer- oder Behätterrohr lösbar und über ein Gewinde axial verstellbar befestigt ist, **dadurch gekennzeichnet, dass** die Befestigung reibschlüssig mittels eines über seine gesamte Länge geschlitzten Rohrelementes (3), das mit einem Abschnitt des Innenmantels direkt am Dämpfer- bzw. Behälterrohr anliegt und einen Zylinderabschnitt (17) größeren Durchmessers mit einem Innengewinde aufweist, erfolgt, wobei der Zylinderabschnitt (17) des Rohrelementes (3) mit einem, ein entsprechendes Außengewinde aufweisenden, ebenfalls geschlitzten Haltering (19) zusammenwirkt und über einen aufgeschobenen Manschettenring (20) zusammengehalten wird.

8. Federbein nach einem oder mehreren der Ansprüche 1 bis 7, **dadurch gekennzeichnet, dass** sich das geschlitzte Rohrelement (3) oder der geschlitzte Haltering (19) über einen mit dem Dämpfer- oder Behälterrohr verbundenen Sicherungsring (9) an diesem abstützt.

9. Federbein nach einem oder mehreren der Ansprüche 1 bis 7, **dadurch gekennzeichnet, dass** ein mit dem Dämpfer- bzw. Behälterrohr verbundener Sicherungsring (9) unterhalb der tiefstmöglichen Lage der Unterkante des geschlitzten Rohrelementes (3) oder des Halteringes (19) angeordnet ist.

## Claims

1. Spring leg for wheel suspensions of motor vehicles having a spring plate (6) attached to the damper or reservoir pipe in order to support the helical spring surrounding the damper or reservoir pipe, wherein the spring plate (6) is preferably formed as a sheet metal part and is attached to the damper or reservoir pipe in a releasable manner and in such a way as to be axially adjustable by means of a thread, **characterised in that** the attachment is effected in a frictionally engaged manner by means of a pipe element (3) which is slit over its whole length, has an external thread and with its internal surface lies directly on the damper or reservoir pipe, the pipe element (3) cooperates with a correspondingly internally threaded set ring (12) or neck,(7) of the spring plate (6), wherein the flank angle of the thread is selected to be of such a size that the force with which the spring is supported on the spring plate (6) effects radial compression of the slit pipe element (3).

2. Spring leg as claimed in claim 1, **characterised in that** the flank angle and/or pitch of the thread is so low that the loading of the spring plate (6) inhibits rotation.

3. Spring leg as claimed in claim 1 or claim 2, **characterised in that** a spring element is disposed between the collar (8) of the spring plate (6) on which the spring (5) lies and the longitudinally slit pipe element (3).

4. Spring leg as claimed in any one or several of claims I to 3, **characterised in that** the collar (8) of the spring plate (6) has a conical neck (7) which is supported on the pipe element (3) via a conical sleeve (10) which is produced from a resilient material.

5. Spring leg as claimed in claim 4, **characterised in that** the sleeve (10) is formed from rubber or synthetic material.

6. Spring leg as claimed in any one or several of claims 1 to 5, **characterised in that** the set ring (12) is formed as a pipe which comprises an internal thread and which lies on the damper or reservoir pipe via a collar (14).

7. Spring leg for wheel suspensions of motor vehicles having a spring plate (6) attached to the damper or reservoir pipe in order to support the helical spring surrounding the damper or reservoir pipe, wherein the spring plate (6) is preferably formed as a sheet metal part and is attached to the damper or reservoir pipe in a releasable manner and in such a way as to be axially adjustable by means of a thread, **characterised in that** the attachment is effected in a frictionally engaged manner by means of a pipe element (3) which is slit over its whole length, which, with a portion of the internal surface, lies directly on the damper or reservoir pipe and which has a cylinder portion (17) of larger diameter having an internal thread, wherein the cylinder portion (17) of the pipe element (3) cooperates with a correspondingly externally threaded and similarly slit holding ring (19) and is held together by means of a sleeve ring (20) which is pushed on.

8. Spring leg as claimed in any one or several of claims 1 to 7, **characterised in that** the slit pipe element (3) or the slit holding ring (19) is supported on the damper or reservoir pipe by means of a securing ring (9) connected to this damper or reservoir pipe.

9. Spring leg as claimed in any one or several of claims I to 7, **characterised in that** a securing ring (9) connected to the damper or reservoir pipe is disposed below the lowest possible position of the lower edge of the slit pipe element (3) or of the holding ring (19).

## Revendications

1. Jambe de suspension pour suspensions de roues de véhicules à moteur, avec une coupelle de ressort (6) fixée au tube d'amortisseur ou au réservoir tubulaire, pour l'appui du ressort bobiné entourant le tube d'amortisseur, respectivement le récipient tubulaire, dans laquelle la coupelle de ressort (6) est de préférence réalisée sous la forme d'une pièce en tôle, et est fixée de manière détachable au tube d'amortisseur, respectivement au récipient tubulaire, et ajustable axialement par l'intermédiaire d'un filet, **caractérisée en ce que** la fixation se fait par friction au moyen d'un organe tubulaire (3) fendu sur toute sa longueur, qui présente un filet externe et est en contact direct avec le tube d'amortisseur, respectivement le récipient tubulaire, par sa face interne, l'organe tubulaire (3) coopère avec une bague d'ajustement (12), respectivement un collet (7) de la coupelle de ressort (6), l'angle de flanc du filet étant choisi si grand que la force avec laquelle le ressort appuie sur la coupelle de ressort (6) assure une compression radiale de l'organe tubulaire fendu (3).

2. Jambe de suspension selon la revendication 1, **caractérisée en ce que** l'angle de flanc et/ou le pas du filet est si petit que la mise en charge de la coupelle de ressort (6) conduit à un blocage en rotation.

3. Jambe de suspension selon la revendication 1 ou la revendication 2, **caractérisée en ce qu'**un organe élastique est disposé entre la collerette (8) de la coupelle de ressort (6), sur lequel repose le ressort (5), et l'organe tubulaire (3) fendu longitudinalement.

4. Jambe de suspension selon une ou plusieurs des revendications 1 à 3, **caractérisée en ce que** la collerette (8) de la coupelle de ressort (6) présente un collet (7) conique qui s'appuie sur l'organe tubulaire (3) par l'intermédiaire d'un manchon (10) conique, fabriqué en matériau élastique.

5. Jambe de suspension selon la revendication 4, **caractérisée en ce que** le manchon (10) est fabriqué en caoutchouc ou en matière synthétique.

6. Jambe de suspension selon une ou plusieurs des revendications 1 à 5, **caractérisée en ce que** la bague d'ajustement (12) est réalisée sous la forme d'un tube présentant un filet interne, qui s'appuie par l'intermédiaire d'une collerette (14) sur le tube d'amortisseur ou le récipient tubulaire.

7. Jambe de suspension pour suspensions de roues de véhicules à moteur, avec une coupelle de ressort (6) fixée au tube d'amortisseur ou au réservoir tubulaire, pour l'appui du ressort bobiné entourant le tube d'amortisseur, respectivement le récipient tubulaire, dans laquelle la coupelle de ressort (6) est de préférence réalisée sous le forme d'une pièce en tôle, et est fixée de manière détachable au tube d'amortisseur, respectivement au récipient tubulaire et ajustable axialement par l'intermédiaire d'un filet, **caractérisée en ce que** la fixation se fait par friction au moyen d'un organe tubulaire (3) fendu sur toute sa longueur, qui est en contact direct avec le tube d'amortisseur, respectivement le récipient tubulaire, par une section de sa face interne, et qui présente une section cylindrique (17) de plus grand diamètre avec un filet interne, la section cylindrique (17) de l'organe tubulaire (3) coopérant avec une bague de retenue (19) également fendue, présentant un filet externe correspondant, et étant maintenue en place par l'intermédiaire d'un manchon (20) ouvert.

8. Jambe de suspension selon une ou plusieurs des revendications 1 à 7, **caractérisée en ce que** l'organe tubulaire fendu (3) ou la bague de retenue fendue (19) s'appuie sur le tube d'amortisseur ou le récipient tubulaire par l'intermédiaire d'une bague de sécurité (9) assemblée avec celui-ci.

9. Jambe de suspension selon une ou plusieurs des revendications 1 à 7, **caractérisée en ce qu'**une bague de sécurité (9) reliée au tube d'amortisseur, respectivement au récipient tubulaire, est disposée en dessous de la position la plus enfoncée du bord inférieur de l'organe tubulaire fendu (3) ou de la bague de retenue (19).
